# EUROPEAN PATENT SPECIFICATION

(11) **EP 3 326 347 B1**
(45) Date of publication and mention of the grant of the patent: **29.04.2020**
(21) Application number: 16747946.8
(22) Date of filing: 22.07.2016
(51) Int. Cl.: H04L 29/08, G06F 13/38, G06F 13/42

(54) **METHOD AND SYSTEM FOR USB 2.0 BANDWIDTH RESERVATION**
VERFAHREN UND SYSTEM ZUR USB-2.0-BANDBREITENRESERVIERUNG
PROCÉDÉ ET SYSTÈME DE RÉSERVATION DE BANDE PASSANTE USB 2.0

(30) Priority: 22.07.2015 US 201562195557 P; 21.07.2016 US 201615216447
(43) Date of publication of application: 30.05.2018
(73) Proprietor: Microchip Technology Incorporated, Chandler, AZ 85224-6199 (US)
(72) Inventor: SHETTY, Santosh, Cedar Park, Texas 78613 (US); NIGAM, Akhlesh, Austin, Texas 78717 (US); CRAWFORD, Carl, Austin, Texas 78732 (US)
(74) Representative: sgb europe
(86) International application number: PCT/US2016/043638
(87) International publication number: WO 2017/015588

(56) References cited:
- US-A1- 2009 150 582
- US-A1- 2011 022 769
- US-A1- 2011 208 892
- US-B1- 6 349 354

## Description

The present disclosure relates to universal serial bus technology, in particular to a bandwidth reservation under universal serial bus ("USB") version 2.0.

In a specific Automotive USB communication requirement there is a need to reserve or prioritize bandwidth. Since the USB hub is a pass-through medium at the USB protocol layer, reservation or prioritization of bandwidth cannot be done for a particular device connected to one of the HUB ports.

For example, some USB devices, such as certain mobile players, mobile phones, etc., drive a proprietary specification. This proprietary specification operates the mobile player in USB host mode and the respective player has full control of USB bandwidth. Automotive original equipment manufacturer ("OEMs"), however, do not want to give up host mode, and certain USB hubs (e.g., USB hubs manufactured by Applicant) solve the problem by providing host bridging. In this mode, a media player has to share bandwidth with other USB devices. USB bulk transfer type does not provide bandwidth reservation.

This and other objects can be achieved by a USB hub and method of operating the same as defined in the independent claims. Further enhancements are characterized in the dependent claims.

Systems and methods for reserving bandwidth in a USB hub are disclosed. The systems and methods may include receiving data from at least one downstream endpoint in a buffer, identifying a current capacity of the buffer, comparing the current capacity of the buffer to a buffer threshold, generating an output based at least on the comparison, based at least on the output, dynamically throttling at least one low-throughput endpoint, and allocating a predefined bandwidth to a USB device that has a predetermined bandwidth requirement by providing bandwidth to the USB device available from the throttle of the at least one low-throughput endpoints.

In various embodiments, the systems and methods may include a USB hub. The USB hub may include at least one upstream port and a plurality of downstream ports, wherein a downstream port can be connected to a USB device that may operate as a USB host, wherein the USB device has a predetermined bandwidth requirement and wherein the USB hub is configured to allocate a predefined bandwidth to said USB device by adaptive throttling of low throughput endpoints.

In some embodiments, the USB hub may include a USB host scheduler which allocates fare share bandwidth for all active bulk endpoints in a round robin fashion. In such embodiments, slower endpoints are pushed to a delayed schedule. In some embodiments, the USB hub may be configured to adaptively throttle low-throughput endpoints by generating a NAK signal for each of the low-throughput endpoints during at least one microframe. In such embodiments, the USB hub may be configured to allocate the predefined bandwidth to said USB device by allocating a remainder of the at least one microframe recovered from the low-throughput endpoints. Also in such embodiments, the USB hub may be configured to adaptively throttle low-throughput endpoints by draining at least one packet from the low-throughput endpoints and responding with a NAK signal.

In some embodiments, the predefined bandwidth is at least 100 Mbps. In some embodiments, the USB hub may be configured to adaptively throttle low-throughput endpoints by adding repeater path delay to downstream ports. In some embodiments, the USB hub may be configured to adaptively throttle low-throughput endpoints by compensating packet parse time. In some embodiments, the USB hub may also include a mode selection module operable to choose between a standard hub operation mode and a traffic shaping mode.

In various embodiments, the systems and methods may also include a USB hub including a configuration register and a comparator. The configuration register may include a buffer operable to receive data from at least one downstream endpoint receiving data in a buffer from at least one downstream endpoint operating in a host mode and communicate data to at least one upstream endpoint, and circuitry communicatively coupled to the buffer operable to identify a current capacity of the buffer. The comparator may be operable to compare the current capacity of the buffer to a buffer threshold and output a signal communicatively coupled to a throttle module operable to provide a throttle to at least one low-throughput endpoint. The USB hub may be configured to allocate a predefined bandwidth to a USB device that has a predetermined bandwidth requirement by providing bandwidth to the USB device available from the throttle of the at least one low- throughput endpoints.

In some embodiments, the USB hub may include a USB host scheduler which allocates fare share bandwidth for all active bulk endpoints in a round robin fashion. In such embodiments, slower endpoints are pushed to a delayed schedule. In some embodiments, the USB hub may be configured to adaptively throttle low-throughput endpoints by generating a NAK signal for each of the low-throughput endpoints during at least one microframe. In such embodiments, the USB hub may be configured to allocate the predefined bandwidth to said USB device by allocating a remainder of the at least one microframe recovered from the low-throughput endpoints. Also in such embodiments, the USB hub may be configured to adaptively throttle low-throughput endpoints by draining at least one packet from the low-throughput endpoints and responding with a NAK signal.

In some embodiments, the predefined bandwidth is at least 100 Mbps. In some embodiments, the USB hub may be configured to adaptively throttle low-throughput endpoints by adding repeater path delay to downstream ports. In some embodiments, the USB hub may be configured to adaptively throttle low-throughput endpoints by compensating packet parse time. In some embodiments, the USB hub may also include a mode selection module operable to choose between a standard hub operation mode and a traffic shaping mode.

In various embodiments, a method for reserving bandwidth in a USB hub is also disclosed. The method may include receiving data in a buffer from at least one downstream endpoint operating in a host mode, identifying a current capacity of the buffer, comparing the current capacity of the buffer to a buffer threshold, generating an output based at least on the comparison, based at least on the output, dynamically throttling at least one low-throughput endpoint, and allocating a predefined bandwidth to a USB device that has a predetermined bandwidth requirement by providing bandwidth to the USB device available from the throttle of the at least one low-throughput endpoints.
Figure 1 illustrates a block diagram of an example USB hub topology for bandwidth reservation, in accordance with certain embodiments of the present disclosure;
Figure 2 illustrates an example known USB microframe for sharing high-speed USB bandwidth among a plurality of endpoints, in accordance with certain embodiments of the present disclosure;
Figure 3 illustrates an example USB micro frame for sharing high-speed USB bandwidth among a plurality of endpoints, in accordance with certain embodiments of the present disclosure;
Figure 4 illustrates an example system and method for determining dynamic throttling for USB bandwidth reservation, in accordance with certain embodiments of the present disclosure; and
Figure 5 illustrates an example block diagram of an example USB hub incorporating dynamic throttling for bandwidth reservation, in accordance with certain embodiments of the present disclosure.

As integration of electronics into automotive applications increases, more and more is demanded of the ability of those automotive applications to accommodate the needs of the associated electronics. However, in certain automotive applications, there is insufficient flexibility for such accommodation. For example, in a specific automotive USB communication requirement there is a need to reserve or prioritize bandwidth. However, since the traditional USB hub is a pass-through medium at the USB protocol layer, reservation or prioritization of bandwidth cannot be done for a particular device connected to one of these traditional HUB ports.

This may become an issue in an automotive context if, for example, a media player demands a certain amount of bandwidth for proper operation. For example, certain USB hubs provided by Omega Computer require one hundred Mbps bandwidth for proper operation. Thus, there is a need for a mechanism to reserve USB bandwidth in the automotive USB host to meet the bandwidth requirement. To determine which traffic should be forwarded or throttled, the hub must examine the incoming packets. With existing hubs, by the time the packet is decoded and parsed it is already too late to decide.

According to various embodiments of the present disclosure, systems and methods for redistributing the bandwidth allocated by the USB host at the HUB node are provided. According to various embodiments of the present disclosure, a USB Host Scheduler implements a round robin fare share bandwidth allocation for all active bulk endpoints. The Host Scheduler implements adaptive throttling of low throughput endpoints. Slower endpoints are pushed to a delayed schedule. The Hub may implement adaptive throttling of USB ports that do not require the bandwidth. A traffic shaping algorithm may modify the host schedule to prioritize the traffic of the device requiring the dedicated bandwidth. Furthermore, repeater traffic may be delayed while the hub makes decision to forward or throttle.

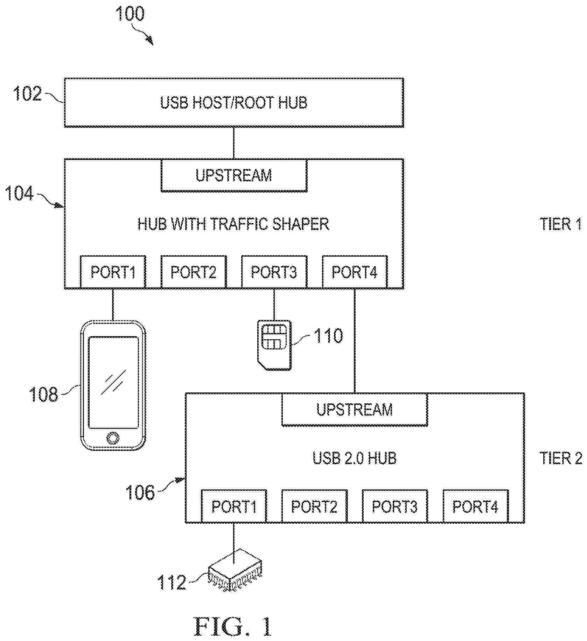

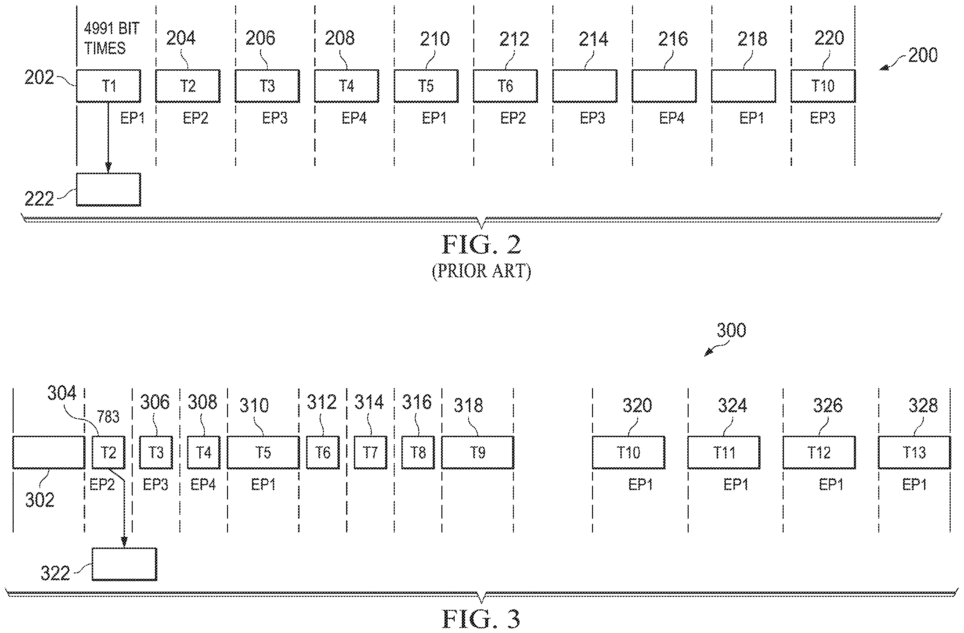

Figure 1 illustrates a block diagram of an example USB hub topology 100 for bandwidth reservation, in accordance with certain embodiments of the present disclosure. In some embodiments, topology 100 may include USB host 102 communicatively coupled to a first USB hub 104, which may in turn be communicatively coupled to a second USB hub 106. Under the current version of the USB 2.0 specification, a high-speed host or device expecting a response to a transmission must timeout the transaction if no signaling is seen within eight hundred-sixteen bit times (approximately 1.5 µs). With certain known USB hubs, this may only allow for at most five hubs to be connected in series before creating a delay that will exceed the host timeout. As described in more detail below with reference to Figures 2-5, however, the systems and methods for bandwidth reservation described herein may consume the timing space of three to four normal USB hubs. However, it retains enough timing flexibility to support two tiers with acceptable operation.

Thus, example topology 100 illustrates first USB hub and second USB hub 106 communicatively coupled to one another. Each USB hub, in turn, has one or more USB devices communicatively coupled to it. For example, first USB hub 104 may have a first USB device 108 and a second USB device 110 communicatively coupled to ports of first USB hub 104. Second USB hub 106 may likewise have a third USB device 112 communicatively coupled to a port of second USB hub 106. In some embodiments, USB devices 108, 110, 112 may be any appropriate electronic device operable to communicate with a USB hub via the USB 2.0 (or compatible) serial communication protocol. For example, USB device 108, 110, 112 may be a tablet computer, smart phone, memory card, GPS device, etc. Although a certain number of USB hubs 104, 106 and USB devices 108, 110, 112 are illustrated in Figure 1 to aid in understanding, one of ordinary skill in the art would note that more, fewer, and/or different USB hubs and/or devices may be present within any given configuration without departing from the scope of the present disclosure.

Figure 2 illustrates an example known USB microframe 200 for sharing high-speed USB bandwidth among a plurality of endpoints, in accordance with certain embodiments of the present disclosure. For the purposes of this disclosure, an "endpoint" may refer to any electronic device (or subset or combination thereof) requesting some portion of the high-speed USB bandwidth. An endpoint may generally correspond to one or more of USB devices 108, 110, 112 or some portion thereof.

In some embodiments, microframe 200 may include a plurality of transaction allocations 202-220. In some embodiments, a "transaction" may include the command, data, and response phases and associated timing for a USB transmission packet. In some embodiments, the amount of bandwidth within microframe 200 for each transaction allocation 202-220 may be approximately 5,000 USB bit times (approximately 10 µs). In some embodiments, microframe 200 may include approximately ten such packet transaction allocations 202-220, although more or fewer may be present within any given configuration without departing from the scope of the present disclosure.

In some embodiments, the number of transaction allocations 202-220 associated with a particular endpoint depends on the number of endpoints requesting use of the bus at any given time. For example, in the example microframe 200 of Figure 2, four different endpoints (denoted as "EP1," "EP2," "EP3," and "EP4") are requesting access, although more, fewer, and/or different endpoints may be present within any given configuration without departing from the scope of the present disclosure. In the example microframe 200 of Figure 2, the amount of bandwidth associated with a particular endpoint (and thus the endpoint's associated USB device) depends entirely on the number of endpoints requesting access and the initial order of request, as requests are traditionally served in a round-robin fashion. Thus, EP1 for example, is allocated three transactions (e.g., transaction allocations 202, 210, and 218) in microframe 200.

In some embodiments, each transaction may include sending one or more signals to the USB hub. These signals are represented in example microframe 200 at 222. These signals may include a packet identifier ("PID"), an address identifier ("ADDR"), data ("DATA"), cyclic redundancy checks ("CRC"), etc.

Figure 3 illustrates an example USB microframe 300 for sharing high-speed USB bandwidth among a plurality of endpoints, in accordance with certain embodiments of the present disclosure. For the purposes of this disclosure, an "endpoint" may refer to any electronic device (or subset or combination thereof) requesting some portion of the high-speed USB bandwidth. An endpoint may generally correspond to one or more of USB devices 108, 110, 112 or some portion thereof.

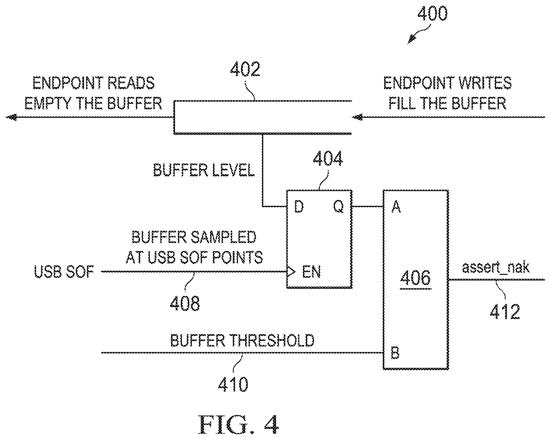

In some embodiments, micro frame 300 may include a plurality of transaction allocations 302-320, 324-328. In some embodiments, a "transaction" may include the command, data, and response phases and associated timing for a USB transmission packet. In some embodiments, the amount of bandwidth within micro frame 300 for each transaction allocation 302-320, 324-328 may be variable, depending on whether the associated transaction has been throttled, as described in more detail below with reference to Figures 4-5.

In the example microframe 300 of Figure 3, the USB device associated with the endpoint denoted "EP1" has been identified as requiring dedicated bandwidth. In some embodiments, a particular USB device may request dedicated bandwidth. In the same or alternative embodiments, the USB hub may automatically associate any request from the particular USB device as deserving of dedicated bandwidth. For example, as described in more detail above, certain USB devices may require a certain amount of dedicated bandwidth (e.g., 100 Mbps) whenever that device transmits via the USB hub. Thus, in an effort to accommodate this USB device, the hub may dynamically adaptively throttle all requests other than those from the particular USB device.

Referring again to Figure 3, the transaction allocations that may typically be associated with EP1 (e.g., transaction allocations 302, 310, 318) as described in more detail above with reference to Figure 2, are given the full bit time allocation (e.g., 5,000 USB bit times). Other transaction allocations associated with other endpoints (e.g., transaction allocations 304, 306, 308, 312, 314, 316) are throttled to a much-reduced bit time allocation. In some embodiments, the hub may accomplish this throttling by providing a "NAK" handshake packet. This packet is generally used to indicate that a particular function is unable to transmit or receive data. Rather than generating this packet in an error condition, however, various embodiments may generate the packet automatically when the associated endpoint is to be throttled instead. The determination of which packets to throttle is described in more detail below with reference to Figures 4-5.

In some embodiments, the NAK packet transaction may be completed in a much-reduced bit time allocation. For example, the transaction may be completed in approximately seven hundred eighty-three bit times. By giving these reduced transaction allocations to other endpoints, the designated high-speed endpoint may be able to accumulate more of the available bandwidth. For example, by reducing the size of the other transaction allocations, EP1 may be able to instigate further transactions (e.g., transaction allocations 320, 324, 326, 328). Thus, within example micro frame 300, EP1 may have associated therewith seven transaction allocations rather than three (e.g., transaction allocations 302, 310, 318, 320, 324, 326, 328). The maximum under the USB 2.0 (or compatible) standard may be six to eight transactions per microframe. This would provide a range of between approximately 200 and 256 Mbps. This would provide a sufficient amount of dedicated bandwidth for the example described in more detail above that requires 100Mbps.

In some embodiments, each transaction may include sending one or more signals to the USB hub. These signals are represented in example microframe 300 at 322. These signals may include a packet identifier ("PID"), an address identifier ("ADDR"), data ("DATA"), cyclic redundancy checks ("CRC"), NAK, etc.

Figure 4 illustrates an example system 400 and method for determining dynamic throttling for USB bandwidth reservation, in accordance with certain embodiments of the present disclosure. In some embodiments, system 400 may include buffer 402 communicatively coupled to latch 404, which may be further communicatively coupled to comparator 406. In some embodiments, buffer 402 may be associated with a data buffer of a USB hub. An endpoint may perform a data write process to fill the buffer and a data read process to empty the buffer, as illustrated in Figure 4. In some embodiments, every write transaction by and endpoint fills the buffer by one maximum transfer unit ("MTU"). For the USB 2.0 specification, the MTU is five hundred-twelve bytes. Likewise, every read transaction by an endpoint empties the buffer by one MTU.

In some embodiments, buffer 402 may be operable to generate a signal associated with the current degree of data capacity of the buffer (the "buffer level"). For example, buffer 402 may be operable to generate a signal containing a binary value indicative of a percentage of the buffer that is full, the amount of data that is within the buffer, etc. This signal may be communicated to an input of latch 404. In some embodiments, the buffer level may be sampled periodically. For example, the buffer level may be sampled at the start of frame ("SOF") for every endpoint requesting access to the hub. The sampling point may, in some embodiments, be associated with signal 408 communicatively coupled to latch 404, thus providing the sampled value to an output of latch 404.

In some embodiments, the output of latch 404 may be communicatively coupled to an input of comparator 406. A second input of comparator 406 may, in some embodiments, be a signal associated with a buffer threshold 410. Buffer threshold 410 may, in some embodiments, be a programmable and/or adjustable threshold value that triggers the throttling of certain packets through the hub. For example, buffer threshold 410 may be a signal containing a binary value indicative of a threshold for percentage of the buffer that is full, a threshold for the amount of data that is within the buffer, etc. For example, buffer threshold may be a signal associated with a programmed value of 25% of the buffer's capacity.

In some embodiments, comparator 406 compares the output of the sampled buffer level and buffer threshold 410. In a first result of this comparison, comparator 406 outputs a first state, and in a second result, a second state. For example, if the current sampled buffer level is higher than buffer threshold 410, an output of comparator 406 may be a logic high, while if the current sampled buffer level is lower than buffer threshold 410, an output of comparator 406 may be a logic low. In some embodiments, the output of comparator 406 may be communicatively coupled to other circuitry of the hub that indicates that the "NAK" signal should be asserted for identified USB hubs. These identified USB hubs may be identified previously (e.g., "all USB devices that are not the particular USB device requiring dedicated bandwidth").

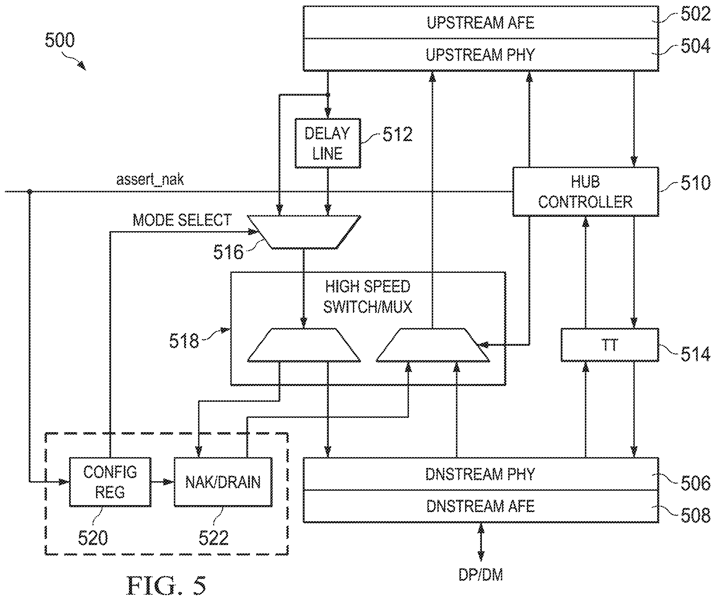

Figure 5 illustrates an example block diagram 500 of an example USB hub incorporating dynamic throttling for bandwidth reservation, in accordance with certain embodiments of the present disclosure. In some embodiments, the USB hub may include upstream and downstream analog front-ends ("AFEs") 502, 508, respectively. Coupled to the AFEs may be upstream and downstream physical layers ("PHYs") 504, 506, respectively. Between the physical layers may be a plurality of components, including hub controller 510, delay line 512, transaction translator ("TT") 514, multiplexor 516, high speed switch 518, configuration register 520, and throttle ("NAK/DRAIN") 522.

The various components 510, 512, 514, 516, 518 are generally known to one of ordinary skill in the art. However, in various embodiments, example USB hub may also include configuration register 520 and throttle 522. The combination of these two components may be generally equated with the components of Figure 4. Configuration register 520 may generally be equated with the combination of buffer 402 and latch 404 as described in more detail above with reference to Figure 4. In some embodiments, comparator 406 may also be a part of configuration register 520. In the same or alternative embodiments, comparator 406 may instead be a part of throttle 522. In some embodiments, throttle 522 may also include the circuitry operable to generate the NAK signals for the designated USB devices. This may also include, for example, computer readable memory storing program instructions as well as identifiers of the designated USB devices to be throttled.

In various embodiments of the present disclosure, both hub and downstream ports will always be high speed. Up and downstream traffic may be using a high-speed repeater path. When this is the case, throttle 522 may set up and tear down connectivity on packet boundaries in both up and down directions. Throttle 522 may also re-clock the packets in both directions. Throttle 522 may also recover serial data from the received stream and transmits it using its own local clock. The USB 2.0 (and compatible) specification allows a maximum delay of thirty-six high-speed bit times through repeater path.

In some embodiments, throttle 522 may add repeater path delay to downstream ports, and compensate packet parse time. All non-bandwidth-demanding IN/OUT/PING tokens may be routed to a virtual device on assertion of signal 412 (e.g., assert_nak). The virtual device may then drain the packet and respond with NAK. Throttle 522 may include a mode to select between "standard" HUB vs the "traffic shaping" features described in more detail above and with reference to Figures 1-4.

Various embodiments of the present disclosure have illustrated systems and methods for USB bandwidth reservation. This may allow, for example, a particular USB device to demand dedicated bandwidth in order to function properly. This may allow for increased flexibility in the USB standard in certain contexts (e.g., automotive applications).

## Claims

1. A USB hub comprising:
at least one upstream port and a plurality of downstream ports, wherein a downstream port can be connected to a USB device (108) which is configurable to operate in a USB host mode, and wherein the USB device (108) has a predetermined bandwidth requirement,
a USB host scheduler which allocates fare share bandwidth for all active bulk endpoints in a round robin fashion according to a host schedule, and
wherein the USB hub (104) is configured to allocate a predefined bandwidth to said USB device (108) by adaptive throttling of low throughput endpoints that do not require the bandwidth by modifying the host schedule.

2. The USB hub of Claim 1, wherein slower endpoints are pushed to a delayed schedule.

3. The USB hub of Claim 2, wherein the USB hub (104) is configured to adaptively throttle low-throughput endpoints by generating a NAK signal for each of the low-throughput endpoints during at least one microframe.

4. The USB hub of Claim 3, wherein the USB hub (104) is configured to allocate the predefined bandwidth to said USB device (108) by allocating a remainder of the at least one microframe recovered from the low-throughput endpoints.

5. The USB hub of one of the preceding Claims, wherein the predefined bandwidth is at least 100 Mbps.

6. The USB hub of one of the preceding Claims, wherein the USB hub (104) is configured to adaptively throttle low-throughput endpoints by adding repeater path delay to downstream ports.

7. The USB hub of one of the preceding Claims, wherein the USB hub (104) is configured to adaptively throttle low-throughput endpoints by compensating packet parse time.

8. The USB hub of one of the preceding Claims, wherein the USB hub (104) is configured to adaptively throttle low-throughput endpoints by draining at least one packet from the low-throughput endpoints and responding with a NAK signal.

9. The USB hub of one of the preceding Claims, wherein the USB hub (104) further comprises a mode selection module operable to choose between a standard hub operation mode and a traffic shaping mode.

10. A USB hub according to one of the preceding claims, further comprising:
a configuration register (520) comprising:
a buffer (402) operable to receive data from at least one downstream endpoint operating in a host mode and communicate data to at least one upstream endpoint;
circuitry (404) communicatively coupled to the buffer operable to identify a current capacity of the buffer (402); and
a comparator (406) operable to compare the current capacity of the buffer to a buffer threshold (410) and output a signal (412) communicatively coupled to a throttle module (522) operable to provide a throttle to at least one low-throughput endpoint; and
wherein the USB hub (104) is configured to provide bandwidth to the USB device (108) available from the throttle of the at least one low- throughput endpoints.

11. The USB hub of Claim 10, wherein the throttle comprises a virtual device that drains the at least one packet from the low-throughput endpoints.

12. The USB hub of one of Claims 10 - 11, wherein the USB hub (104) further comprises a mode selection module operable to choose between a standard hub operation mode and a traffic shaping mode.

13. A method for reserving bandwidth in a USB hub according to one of the preceding claims, the method comprising:
allocating fare share bandwidth by a USB host scheduler for all active bulk endpoints in a round robin fashion according to a host schedule;
receiving a bandwidth request by the USB device (108) and thereupon allocating a predefined bandwidth to said USB device (108) by adaptive throttling of low throughput endpoints that do not require the bandwidth by modifying the host schedule.

14. The method according to claim 13, further comprising:
receiving data in a buffer (402) from at least one downstream endpoint operating in a host mode;
identifying a current capacity of the buffer (402);
comparing the current capacity of the buffer (402) to a buffer threshold (410);
generating an output (412) based at least on the comparison;
based at least on the output (412), dynamically throttling at least one low-throughput endpoint.

## Patentansprüche

1. USB-Hub, der aufweist:
zumindest einen Upstream-Port und mehrere Downstream-Ports, wobei ein Downstream-Port mit einer USB-Vorrichtung (108) verbunden werden kann, die für den Betrieb in einem USB-Host-Modus konfiguriert werden kann, und wobei die USB-Vorrichtung (108) eine vorgegebene Bandbreitenanforderung aufweist,
einen USB-Host-Zeitplaner, der allen aktiven Bulk-Endpunkten gemäß einem Host-Zeitplan in einem Rundlauf-Verfahren einen gerechten Anteil an Bandbreite zuweist, und
wobei der USB-Hub (104) konfiguriert ist, um der USB-Vorrichtung (108) eine vorgegebene Bandbreite zuzuweisen durch adaptives Drosseln von Endpunkten mit geringem Durchsatz, die die Bandbreite nicht benötigen, indem der Host-Zeitplan geändert wird.

2. USB-Hub nach Anspruch 1, wobei langsamere Endpunkte auf einen verzögerten Zeitplan verschoben werden.

3. USB-Hub nach Anspruch 2, wobei der USB-Hub (104) konfiguriert ist, um Endpunkte mit niedrigem Durchsatz durch Erzeugen eines NAK-Signals für jeden der Endpunkte mit niedrigem Durchsatz während zumindest eines Mikroframes adaptiv zu drosseln.

4. USB-Hub nach Anspruch 3, wobei der USB-Hub (104) konfiguriert ist, um die vorgegebene Bandbreite der USB-Vorrichtung (108) zuzuweisen, indem ein Rest des zumindest einen Mikroframes zugewiesen wird, der von den Endpunkten mit geringem Durchsatz rückgewonnen wurde.

5. USB-Hub nach einem der vorhergehenden Ansprüche, wobei die vorgegebene Bandbreite zumindest 100 Mbit/s beträgt.

6. USB-Hub nach einem der vorhergehenden Ansprüche, wobei der USB-Hub (104) so konfiguriert ist, dass er Endpunkte mit niedrigem Durchsatz durch Hinzufügen einer Repeater-Pfad-Verzögerung zu Downstream-Ports adaptiv drosselt.

7. USB-Hub nach einem der vorhergehenden Ansprüche, wobei der USB-Hub (104) konfiguriert ist, um Endpunkte mit geringem Durchsatz durch Kompensieren der Datenpaketanalysezeit adaptiv zu drosseln.

8. USB-Hub nach einem der vorhergehenden Ansprüche, wobei der USB-Hub (104) konfiguriert ist, um Endpunkte mit niedrigem Durchsatz adaptiv zu drosseln, indem zumindest ein Datenpaket von den Endpunkten mit niedrigem Durchsatz abgeleitet wird und mit einem NAK-Signal geantwortet wird.

9. USB-Hub nach einem der vorhergehenden Ansprüche, wobei der USB-Hub (104) weiterhin ein Modusauswahlmodul aufweist, das betreibbar ist, um zwischen einem Standard-Hub-Betriebsmodus und einem Verkehrsgestaltungsmodus zu wählen.

10. USB-Hub nach einem der vorhergehenden Ansprüche, der weiterhin aufweist:
ein Konfigurationsregister (520), das aufweist:
einen Puffer (402), der so betreibbar ist, dass er Daten von zumindest einem Downstream-Endpunkt empfängt, der in einem Hostmodus arbeitet, und Daten an zumindest einen Upstream-Endpunkt überträgt;
Schaltung (404), die kommunikativ mit dem Puffer gekoppelt ist und betreibbar ist, um eine gegenwärtige Kapazität des Puffers (402) zu identifizieren; und
einen Komparator (406), der betreibbar ist, um die gegenwärtige Kapazität des Puffers mit einem Pufferschwellenwert (410) zu vergleichen und ein Signal (412) auszugeben, das kommunikativ mit einem Drosselungsmodul (522) gekoppelt ist, das betreibbar ist, um eine Drosselung an zumindest einen Endpunkt mit niedrigem Durchsatz bereitzustellen; und
wobei der USB-Hub (104) konfiguriert ist, um der USB-Vorrichtung (108) Bandbreite bereitzustellen, die von der Drosselung des zumindest einen Endpunkts mit niedrigem Durchsatz verfügbar ist.

11. USB-Hub nach Anspruch 10, wobei die Drosselung eine virtuelle Anordnung aufweist, die das zumindest eine Datenpaket von den Endpunkten mit geringem Durchsatz ableitet.

12. USB-Hub nach einem der Ansprüche 10 bis 11, wobei der USB-Hub (104) weiterhin ein Modusauswahlmodul aufweist, das betreibbar ist, um zwischen einem Standard-Hub-Betriebsmodus und einem Verkehrsgestaltungsmodus zu wählen.

13. Verfahren zum Reservieren von Bandbreite in einem USB-Hub gemäß einem der vorhergehenden Ansprüche, wobei das Verfahren aufweist:
Zuweisen eines gerechten Anteils an Bandbreite durch einen USB-Host-Zeitplaner für alle aktiven Bulk-Endpunkte in einem Rundlauf-Verfahren gemäß einem Host-Zeitplan;
Empfangen einer Bandbreitenanforderung durch die USB-Vorrichtung (108) und daraufhin Zuweisen einer vorgegebenen Bandbreite an die USB-Vorrichtung (108) durch adaptives Drosseln, durch Ändern des Host-Zeitplans, von Endpunkten mit niedrigem Durchsatz, die die Bandbreite nicht benötigen.

14. Verfahren gemäß Anspruch 13, das weiterhin aufweist:
Empfangen von Daten in einem Puffer (402) von zumindest einem Downstream-Endpunkt, der in einem Host-Modus arbeitet;
Identifizieren einer gegenwärtigen Kapazität des Puffers (402);
Vergleichen der gegenwärtigen Kapazität des Puffers (402) mit einem Pufferschwellenwert (410);
Erzeugen einer Ausgabe (412) zumindest auf der Grundlage des Vergleichs;
basierend zumindest auf der Ausgabe (412), dynamisches Drosseln zumindest eines Endpunkts mit niedrigem Durchsatz.

## Revendications

1. Concentrateur USB comprenant :
au moins un port en amont et une pluralité de ports en aval, dans lequel un port en aval peut être connecté à un dispositif USB (108) qui est configurable pour fonctionner dans un mode d'hôte USB, et dans lequel le dispositif USB (108) présente une exigence de bande passante prédéterminée ;
un planificateur d'hôte USB qui affecte une part de bande passante équitable pour tous les points d'extrémité de masse actifs, de manière circulaire, selon une planification d'hôte ; et
dans lequel le concentrateur USB (104) est configuré de manière à affecter une bande passante prédéfinie audit dispositif USB (108), par le biais d'un étranglement adaptatif de points d'extrémité à faible débit qui ne nécessitent pas la bande passante, en modifiant la planification d'hôte.

2. Concentrateur USB selon la revendication 1, dans lequel des points d'extrémité plus lents sont poussés vers une planification retardée.

3. Concentrateur USB selon la revendication 2, dans lequel le concentrateur USB (104) est configuré de manière à étrangler de manière adaptative des points d'extrémité à faible débit, en générant un signal d'accusé de non-réception, NAK, pour chacun des points d'extrémité à faible débit pendant au moins une micro-trame.

4. Concentrateur USB selon la revendication 3, dans lequel le concentrateur USB (104) est configuré de manière à affecter la bande passante prédéfinie audit dispositif USB (108), en affectant un reste de ladite au moins une micro-trame récupéré à partir des points d'extrémité à faible débit.

5. Concentrateur USB selon l'une quelconque des revendications précédentes, dans lequel la bande passante prédéfinie est d'au moins 100 Mbit/s.

6. Concentrateur USB selon l'une quelconque des revendications précédentes, dans lequel le concentrateur USB (104) est configuré de manière à étrangler de manière adaptative des points d'extrémité à faible débit, en ajoutant un retard de trajet de répéteur aux ports en aval.

7. Concentrateur USB selon l'une quelconque des revendications précédentes, dans lequel le concentrateur USB (104) est configuré de manière à étrangler de manière adaptative des points d'extrémité à faible débit, en compensant un temps d'analyse de paquets.

8. Concentrateur USB selon l'une quelconque des revendications précédentes, dans lequel le concentrateur USB (104) est configuré de manière à étrangler de manière adaptative des points d'extrémité à faible débit, en drainant au moins un paquet à partir des points d'extrémité à faible débit, et en répondant avec un signal NAK

9. Concentrateur USB selon l'une quelconque des revendications précédentes, dans lequel le concentrateur USB (104) comprend en outre un module de sélection de mode exploitable de manière à choisir entre un mode de fonctionnement de concentrateur standard et un mode de mise en forme de trafic.

10. Concentrateur USB selon l'une quelconque des revendications précédentes, comprenant en outre :
un registre de configuration (520) comprenant :
une mémoire tampon (402) exploitable de manière à recevoir des données en provenance d'au moins un point d'extrémité en aval fonctionnant dans un mode d'hôte et à communiquer des données à au moins un point d'extrémité en amont ;
un montage de circuits (404) couplé en communication à la mémoire tampon, exploitable de manière à identifier une capacité en cours de la mémoire tampon (402) ; et
un comparateur (406) exploitable de manière à comparer la capacité en cours de la mémoire tampon à un seuil de mémoire tampon (410), et à fournir en sortie un signal (412) couplé en communication à un module d'étranglement (522) exploitable de manière à fournir un étranglement à au moins un point d'extrémité à faible débit ; et
dans lequel le concentrateur USB (104) est configuré de manière à fournir une bande passante au dispositif USB (108) disponible à partir de l'étranglement dudit au moins un point d'extrémité à faible débit.

11. Concentrateur USB selon la revendication 10, dans lequel l'étranglement comprend un dispositif virtuel qui draine ledit au moins un paquet à partir des points d'extrémité à faible débit.

12. Concentrateur USB selon l'une quelconque des revendications 10 à 11, dans lequel le concentrateur USB (104) comprend en outre un module de sélection de mode exploitable de manière à choisir entre un mode de fonctionnement de concentrateur standard et un mode de mise en forme de trafic.

13. Procédé de réservation de bande passante dans un concentrateur USB selon l'une des revendications précédentes, le procédé comprenant les étapes ci-dessous consistant à :
affecter une part de bande passante équitable, pour un planificateur d'hôte USB, pour tous les points d'extrémité de masse actifs, de manière circulaire, selon une planification d'hôte ;
recevoir une demande de bande passante par le biais du dispositif USB (108), et affecter subséquemment une bande passante prédéfinie audit dispositif USB (108), par le biais d'un étranglement adaptatif de points d'extrémité à faible débit qui ne nécessitent pas la bande passante, en modifiant la planification d'hôte.

14. Procédé selon la revendication 13, comprenant en outre les étapes ci-dessous consistant à :
recevoir des données dans une mémoire tampon (402), en provenance d'au moins un point d'extrémité en aval fonctionnant dans un mode d'hôte ;
identifier une capacité en cours de la mémoire tampon (402) ;
comparer la capacité en cours de la mémoire tampon (402) à un seuil de tampon (410) ;
générer une sortie (412) sur la base, au moins, de la comparaison ;
sur la base, au moins, de la sortie (412), étrangler dynamiquement au moins un point d'extrémité à faible débit.
